# EUROPEAN PATENT APPLICATION

(11) **EP 3 029 566 A1**
(43) Date of publication of application: **08.06.2016**
(21) Application number: 14801043.2
(22) Date of filing: 13.05.2014
(51) Int. Cl.: G06F 9/445

(54) **APPLICATION PACKAGING DEVICE AND METHOD**

(30) Priority: 01.08.2013 CN 201310332251
(71) Applicant: ZTE Corporation, Shenzhen, Guangdong 518057 (CN)
(72) Inventor: WU, Xinyu, Shenzhen Guangdong 518057 (CN); DING, Yan, Shenzhen Guangdong 518057 (CN); CHEN, Xiaoqiang, Shenzhen Guangdong 518057 (CN)
(74) Representative: Mozzi, Matteo
(86) International application number: PCT/CN2014/077398
(87) International publication number: WO 2014/187255

(57) **Abstract**

An application packaging device and method are provided. The method includes: an installation package of an application is unzipped; each piece of channel information is respectively extracted from multiple pieces of acquired channel information; and packaging is performed according to each piece of extracted channel information and the unzipped installation package respectively to generate multiple installation packages respectively corresponding to each piece of channel information. The present invention solves the problem that the process of multi-channel packaging of the installation package of the application is tedious, increases the efficiency of the multi-channel packaging, and improves the user experience.

## Description

### Technical Field

The present invention relates to the field of data compression, and in particular to an application packaging device and method.

### Background

The release of terminal applications needs to face various markets which are called channels. Sometimes, we need to know which channel an application is downloaded from. For example, we may need to make statistics on which market's user number is larger. For another example, we may have some profits to be shared with the specific channels. All these are making statistics on channel information.

For making statistics on the channel information, we have to add the channel information to a certain position of a program, and then separately package aiming at different channels. Generally speaking, a channel number can be added to a configuration file instead of being directly written in codes. A channel file can also serve as a resource, and then resource information is read from the codes. The advantage is that the channel number in related files can be automatically modified aiming at different channels, and then packaging is automatically performed for the channel.

In related technologies, multi-channel packaging of mobile terminal application is implemented mainly by two ways; one is packaging manually, that is, aiming at each channel number, the corresponding code or file in the program is modified, and then packaging is performed; such way is very tedious and time-consuming; another is packaging by virtue of an automatically packaging tool; the Umeng lab has invented a similar multi-channel packaging tool available for use.

The Android channel packaging tool of Umeng is adding a tag about the channel information in Manifest of Android, and then obtaining the channel number by reading values in the strings.xml (which is a character string resource file). The program written by using java automatically replaces the channel number in the strings.xml, and circularly performs packaging of the APK program all at once. So it is needed to edit the configuration file in the packaging tool interface.

The inventor finds, during the research, that the Android channel packaging tool of Umeng needs to add the channel number manually, which is more troublesome to use when there are more channel numbers; the format of the channel number used by the tool is fixed and cannot be defined by the user; the tool mainly focuses on compiling the channel number and does not have a separate signature function.

Aiming at the problem in related technologies that the process of multi-channel packaging of the installation package of the application is tedious, an effective solution has not been presented yet.

### Summary

The present invention provides an application packaging device and method, for at least solving the problem that the process of multi-channel packaging of the installation package of the application is tedious.

According to an aspect of the present invention, a device for packaging an application is provided, which includes: an unzipping module, an extracting module and a packaging module; wherein, the unzipping module is configured to unzip an installation package of an application; the extracting module is configured to respectively extract each piece of channel information from multiple pieces of acquired channel information; and the packaging module is coupled with the extracting module and the unzipping module, and is configured to perform packaging according to each piece of channel information extracted by the extracting module and the installation package unzipped by the unzipping module respectively to generate multiple installation packages respectively corresponding to each piece of channel information.

Preferably, the device further includes: an acquiring module, which is coupled with the extracting module, and is configured to acquire the multiple pieces of channel information.

Preferably, the multiple pieces of channel information are preset by a user.

Preferably, in a situation where the acquiring module fails to acquire multiple pieces of channel information, the packaging module is further configured to generate an installation package according to the installation package unzipped by the unzipping module.

Preferably, the packaging module is further configured to name the installation package obtained by packaging, wherein the name of the installation package includes an identity of the channel information used for generating the installation package.

Preferably, the installation package generated by the packaging module is the one which is signed.

Preferably, the packaging module includes: a replacing unit, which is configured to respectively replace the channel information in the installation package unzipped by the unzipping module with each piece of extracted channel information; and a packaging unit, which is configured to package the installation package processed by the replacing unit to generate multiple installation packages respectively corresponding to each piece of channel information.

Preferably, the device further includes: a receiving module, which is coupled with the unzipping module, and is configured to receive, through a connection with a user terminal, the installation package of the application uploaded by the user terminal; and a sending module, which is coupled with the packaging module, and is configured to send the installation package obtained by processing of the packaging module to the user terminal.

According to another aspect of the present invention, a method for packaging for an application is also provided, which includes that: the installation package of the application is unzipped; each piece of channel information is respectively extracted from multiple pieces of acquired channel information; and packaging is performed according to each piece of extracted channel information and the unzipped installation package respectively to generate multiple installation packages respectively corresponding to each piece of channel information.

Preferably, before the installation package of the application is unzipped, the method further includes that: through the connection with the user terminal, the installation package of the application uploaded by the user terminal is received; after multiple installation packages respectively corresponding to each piece of channel information are generated, the method further includes that: the installation package obtained by packaging is sent to the user terminal.

Through the present invention, the unzipping module unzips the installation package of the application, the extracting module respectively extracts each piece of channel information from multiple pieces of acquired channel information, and the packaging module performs packaging according to each piece of channel information extracted by the extracting module and the installation package unzipped by the unzipping module respectively to generate multiple installation packages respectively corresponding to each piece of channel information; in this way, the problem that the process of multi-channel packaging of the installation package of the application is tedious is solved, the efficiency of the multi-channel packaging is increased, and the user experience is improved.

### Brief Description of the Drawings

The accompanying drawings described here are used for providing a deeper understanding of the present invention, and constitute a part of the application; schematic embodiments of the present invention and description thereof are used for illustrating the present invention and not intended to form an improper limit to the present invention. In the accompanying drawings:
Fig. 1 is a structural diagram of a device for packaging an application according to an embodiment of the application;
Fig. 2 is a structural diagram of a device for packaging an application according to a first preferred embodiment of the application;
Fig. 3 is a structural diagram of a device for packaging an application according to a second preferred embodiment of the application;
Fig. 4 is a structural diagram of a device for packaging an application according to a third preferred embodiment of the application;
Fig. 5 is a flowchart of a method for packaging an application according to an embodiment of the application;
Fig. 6 is a user interface diagram of a packaging tool according to a preferred embodiment of the application; and
Fig. 7 is a processing flowchart of a packaging script according to a preferred embodiment of the application.

### Detailed Description of the Embodiments

Note that embodiments and features in the embodiments of the application can be combined with each other on condition of not conflicting. The present invention is elaborated below with reference to the accompanying drawings and in combination with the embodiments.

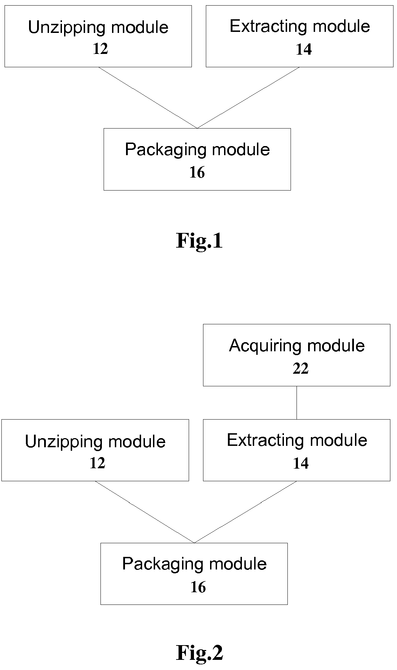

The present embodiment provides a device for packaging an application; Fig. 1 is a structural diagram of the device for packaging an application according to an embodiment of the application; as shown in Fig. 1, the device may include: the unzipping module 12, the extracting module 14 and the packaging module 16; wherein the unzipping module 12 is configured to unzip the installation package of the application; the extracting module 14 is configured to respectively extract each piece of channel information from multiple pieces of acquired channel information; and the packaging module 16 is coupled with the extracting module 14 and the unzipping module 12 respectively, and is configured to perform packaging according to each piece of channel information extracted by the extracting module 14 and the installation package unzipped by the unzipping module 12 respectively to generate multiple installation packages respectively corresponding to each piece of channel information.

Through the above device, because the extracting module 14 is adopted to respectively extract each piece of channel information from the multiple pieces of channel information, and each piece of extracted channel information and an installation package file unzipped by the unzipping module 12 are respectively used for generating multiple installation package files respectively corresponding to each piece of channel information, compared with the way in related technologies that it is needed to manually add a channel number, or it is needed to manually select a certain piece of channel information from the multiple pieces of channel information to perform packaging, the efficiency of the present embodiment is increased. The present embodiment solves the problem that the process of multi-channel packaging of the installation package of the application is tedious, increases the efficiency of the multi-channel packaging, and improves the user experience.

The modules and units involved in the present embodiment can be implemented by means of both software and hardware. The modules and units described in the present embodiment can also be set in a processor; for example, it can be described as: a processor includes an unzipping module 12, an extracting module 14 and a packaging module 16. Wherein, in some cases, the names of these modules do not form a limit to the modules; for example, the unzipping module can also be described as "a module which is configured to unzip the installation package of the application".

In a preferred embodiment, the installation package is the one which is not signed.

In another preferred embodiment, the installation package is the one which is signed. In this case, the device can also provide a clearing module, which is configured to clear signature information in the unzipped installation package so as to repackage the installation package.

Fig. 2 is a structural diagram of the device for packaging an application according to a first preferred embodiment of the application; as shown in Fig. 2, preferably, the device may also include: the acquiring module 22, which is coupled with the extracting module 14, and is configured to acquire the multiple pieces of channel information. Through the acquiring module 22, the multiple pieces of channel information can be acquired on a fixed path, or by searching, or according to settings of the user, thus flexibility of the device is improved.

Preferably, the multiple pieces of channel information can be preset by the user; the user can modify the multiple pieces of channel information, including deleting one or more of the multiple pieces of channel information, adding new channel information to the multiple pieces of channel information, or changing a certain piece of channel information or some pieces of channel information, wherein the changing includes changing the format of the channel information. In this way, the user can perform the needed multi-channel packaging more freely, and the user can also define the new channel information, thereby improving the availability of the device, and expanding the application scenarios of the device.

Preferably, in a situation where the acquiring module 22 fails to acquire multiple pieces of channel information, the packaging module 16 is further configured to generate an installation package according to the installation package unzipped by the unzipping module 12. For example, the installation package unzipped by the unzipping module 12 is zipped again, and the zipped installation package is signed by using a new signature certificate and password to generate an installation package.

Note that, there can be many reasons that the acquiring module 22 fails to acquire the channel information; the reasons can be a failure of the device during use, in this case, the device can also provide a log generating module, which is configured to generate corresponding failure information according to the failure of the device for the user to view and troubleshoot the failure; the reasons can also be active settings of the user, for example, in a situation where the user only needs to sign the installation package again, the user can clear the channel information in the multiple pieces of channel information, or use other ways to make the acquiring module 22 fail to acquire the channel information (e.g. setting a wrong path of the multiple pieces of channel information, or setting the path that the acquiring module 22 acquires the multiple pieces of channel information as idle), then the device repackages, only according to the installation package unzipped by the unzipping module 12, to generate an installation package which is signed again.

Preferably, the information for signature, such as the signature certificate and password, can be set by the user as needed.

Preferably, the packaging module 16 is further configured to name the installation package obtained by packaging, wherein the name of the installation package includes the identity of the channel information used for generating the installation package. By using the identity of the channel information to name, it is convenient for the user to find a needed installation file in multiple generated installation files, and the user experience is further improved.

Preferably, the installation package generated by the packaging module is the one which is signed; by signing the installation package, the integrity and legality of the installation package file can be ensured, unauthorized use and modification of the installation package are prevented, and the protection of the installation package is improved.

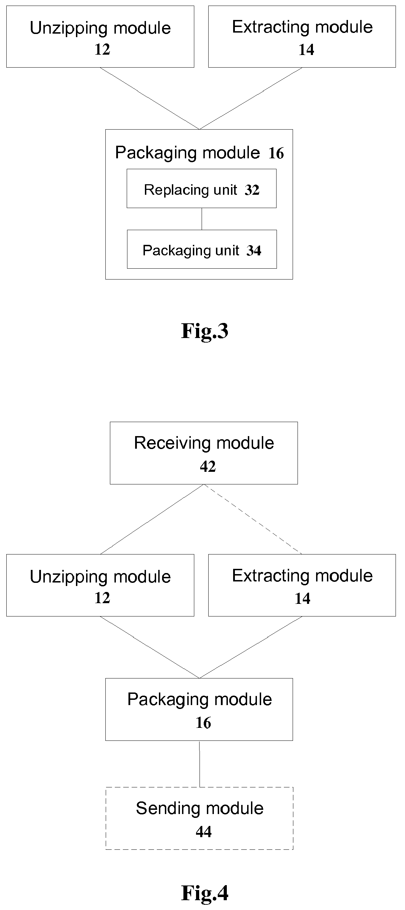

Fig. 3 is a structural diagram of a device for packaging an application according to a second preferred embodiment of the application; as shown in Fig. 3, preferably, the packaging device 16 may include: the replacing unit 32 which is configured to respectively replace the channel information in the installation package unzipped by the unzipping module 12 with each piece of extracted channel information, the packaging unit 34 which is coupled with the replacing unit 32, and is configured to package the installation package processed by the replacing unit 32 to generate multiple installation packages respectively corresponding to each piece of channel information. For an installation package, the channel information may be included in it, and the channel information may not be the one wanted by the user; for adding the new channel information to the installation package, for example, it is feasible to extract, through the above device, a piece of new channel information after unzipping the installation package with the old channel information, then replace the old channel information in the unzipped installation package with the new channel information, and finally package the replaced installation package file to generate a new installation package file.

Fig. 4 is a structural diagram of a device for packaging an application according to a third preferred embodiment of the application; as shown in Fig. 4, the device may also include: the receiving module 42, which is coupled with the unzipping module 12, and is configured to receive, through the connection with the user terminal, the installation package of the application uploaded by the user terminal; and the sending module 44, which is coupled with the packaging module 16, and is configured to send the installation package obtained by processing of the packaging module 16 to the user terminal. In this way, a remote multi-channel packaging way is implemented, in which the user has no need to directly use the device or install software for implementing the device any more, but just needs to send, through web services or other service able to be applied to remote call or remote file transfer, the installation package of the application (preferably, including a multi-channel information file, the signature certificate, and so on) to the receiving module 42 of the device at the remote end, and receive, through the sending module 44 of the device, multiple installation packages after the multi-channel packaging.

Note that, in the above preferred embodiments, the extracting module 14 can be coupled with the unzipping module 12, and the receiving module 42 can also be coupled with the extracting module 14.

The present embodiment also provides an application packaging method; on condition of not conflicting, steps and implementations of functions of the method can also be illustrated in combination with the modules and implementations of functions of the application packaging device, so they will not be repeated here.

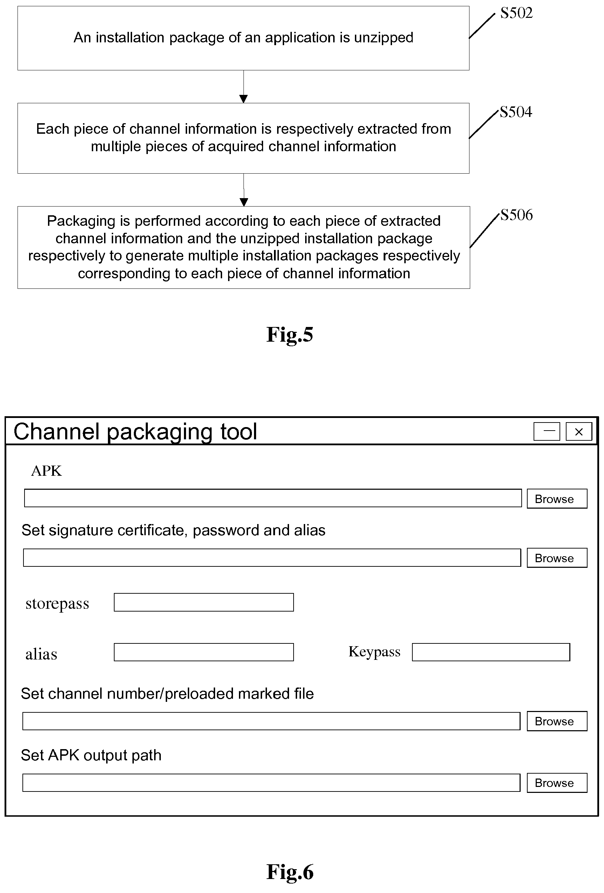

Fig. 5 is a flowchart of a method for packaging an application according to an embodiment of the application; as shown in Fig. 5, the flow includes the following steps.
S502: the installation package of the application is unzipped;
S504: each piece of channel information is respectively extracted from multiple pieces of acquired channel information; and
S506: packaging is performed according to each piece of extracted channel information and the unzipped installation package respectively to generate multiple installation packages respectively corresponding to each piece of channel information.

Note that, these steps presented in the flowchart of the accompanying drawings can be executed in a computer system like a group of machine-executable instructions; besides, although a logical sequence is shown in the flowchart, in some cases, the presented or described steps can be executed in an order different from that described here.

Through the above steps, the installation package of the application is unzipped, each piece of channel information is respectively extracted from multiple pieces of acquired channel information; and packaging is performed according to each piece of extracted channel information and the unzipped installation package respectively to generate multiple installation packages respectively corresponding to each piece of channel information; thus, the problem that the process of multi-channel packaging of the installation package of the application is tedious is solved, the efficiency of the multi-channel packaging is increased, and the user experience is improved.

Preferably, before each piece of channel information is respectively extracted from multiple pieces of acquired channel information, the method further includes that: multiple pieces of channel information are acquired.

Preferably, the multiple pieces of channel information are preset by the user.

Preferably, in a situation where it is failed to acquire multiple pieces of channel information, performing packaging according to each piece of extracted channel information and the unzipped installation package respectively to generate multiple installation packages respectively corresponding to each piece of channel information further includes that: a new installation package is generated according to the unzipped installation package.

Preferably, performing packaging according to each piece of extracted channel information and the unzipped installation package respectively to generate multiple installation packages respectively corresponding to each piece of channel information further includes that: the installation package obtained by packaging is named, wherein the name of the installation package includes the identity of the channel information used for generating the installation package.

Preferably, the multiple generated installation packages respectively corresponding to each piece of channel information are the signed installation packages.

Preferably, performing packaging according to each piece of extracted channel information and the unzipped installation package respectively to generate multiple installation packages respectively corresponding to each piece of channel information further includes that: the channel information in the unzipped installation package is replaced with each piece of extracted channel information; the installation package after replacing processing is packaged to generate multiple installation packages respectively corresponding to each piece of channel information.

Preferably, before the installation package of the application is unzipped, the method further includes that: through the connection with the user terminal, the installation package of the application uploaded by the user terminal is received; after multiple installation packages respectively corresponding to each piece of channel information are generate, the method further includes that: the installation package obtained by packaging is sent to the user terminal.

Preferably, for a mobile application store, after the user uploads an application, a manager of the store can use the packaging method to automatically generate the installation packages corresponding to multiple channels, and then distribute the installation packages to channel.

The implementation process is described below in combination with the preferred embodiments.

The present preferred embodiment relates to the field of development of mobile terminal application; the specific usage scenario includes that: when it is needed to release a mobile terminal application, a version of an installation package is made. Through the present preferred embodiment, a convenient and flexible tool is provided for multi-channel packaging of the mobile terminal application, and a separate signature function is provided.

A solution of the present preferred embodiment includes the following step:
after the user opens an operation interface of a channel packaging tool to perform the necessary settings, the tool automatically performs a loop operation of channel packaging.

The flow of channel packaging includes the following steps.
S1: the installation package is provided for the user to perform unzipping operation and other operations, so as to separate a file including the channel information from the installation package. The unzipping operation here can be implemented by using an unzipping tool, or a decompiling tool, or a resource packaging tool provided by a platform; the channel information file exists on a corresponding path after unzipping.
S2: a single channel number is circularly extracted from a channel text file provided by the user to replace the original channel number in the channel information file, wherein the channel information can be placed in the installation package as a single resource file, and can also be a character string value in the existing resource xml file.
S3: a tool provided by a system platform is used for performing zipping, signing and other operations again, and finally a series of installation packages named according to the corresponding channel numbers can be obtained in a specified directory.

Preferably, the channel information can be defined by the user; except the basic channel, the channel information can also include version information, time, and so on. For example, the channel number "Android-v2.0>Common>V3.3.0>20130517>NA>NA>NA>baidu>NA>NA" includes a platform version, an application version, a date and channel information.

Preferably, when the user does not set a channel text file path, namely the default is a pattern of only signing, and then a signing tool can be directly called to sign the installation package according to the signature information input by the user.

By using the solution of the present preferred embodiment, packaging can be performed by only providing the certificate and password needed for signing the installation package of the application of an unsigned terminal, and a text file including the channel number, so it is simple to use. Meanwhile, the present preferred embodiment can also be used for only signing the installation package of the application of the terminal. The format of the channel number can also be defined by the user.

Preferably, if it is not successful in packaging, a log file can also be provided for viewing detailed error information to locate.

Through the tools provided by the present preferred embodiment, the problem that it is tedious to manually modify codes to package during releasing multiple channel numbers is solved, and the personnel which do not know much about the development of mobile terminal can also perform signing and channel packaging to the installation package of the application of the terminal.

By taking the multi-channel packaging of the APK program of the Android platform for example, the use and implementing method of the multi-channel packaging tools provided by the above preferred embodiment are described and illustrated in combination with the accompanying drawings.

The implementing method includes the following steps.
S1: a batch file is clicked twice, and then a tool interface appears; Fig. 6 is a user interface diagram of a packaging tool according to a preferred embodiment of the application; as shown in Fig. 6, a path of the unsigned installation package, a signature certificate, a signature password, an alias and an alias password are input according to an interface prompt. If it is only needed to sign the installation package, then the path of the channel file is not set; if it is needed to perform multi-channel packaging, then the text file path storing the channel number is selected at a corresponding position of the interface; finally an output path of the installation package is set, and a Generate button is clicked. After packaging is completed, a prompt appears on the interface, and then a generated channel version installation package or signature installation package can be seen on the output path. The whole process only lasts for several seconds.
S2: after inputting on the interface and clicking the Generate button, the corresponding setting generates a corresponding attribute file, and then the packaging script is called.

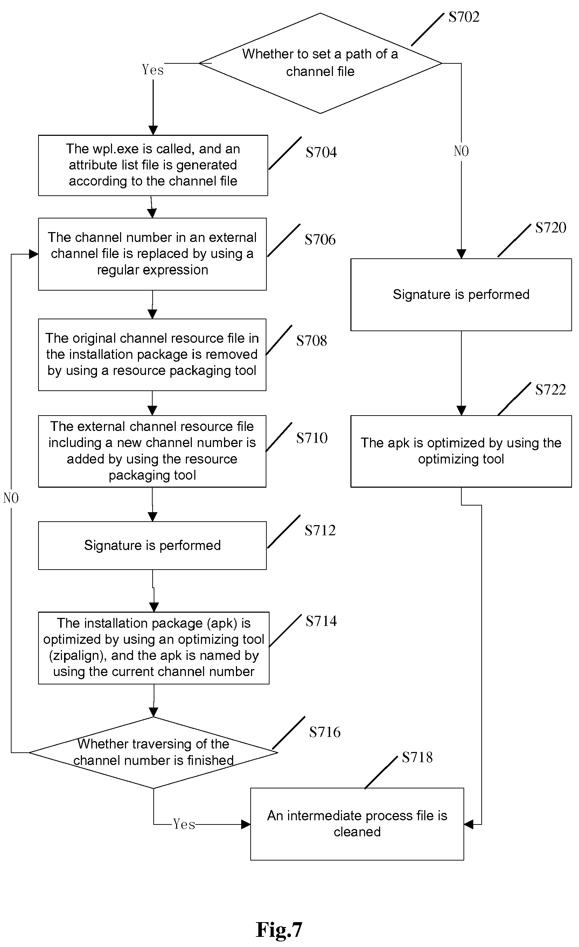

Fig. 7 is a processing flowchart of a packaging script according to a preferred embodiment of the application; as shown in Fig. 7, the flow includes the following steps:
S702: it is judged whether the current operation is signing or channel packaging according to whether to set the path of the channel file; if it is channel packaging, S704 is performed; if it is signing, S720 is performed;
S704: if the current operation is channel packaging, then a channel file formatting tool is called to generate a corresponding channel attribute file according to a channel number text file; a list attribute, whose values are all the channel numbers, is defined in the file, and each channel number is separated by a comma;
S706: the channel number in an external channel file is replaced by using a regular expression;
S708: the channel file in the given installation package is removed by using an Android resource packaging tool;
S710: the external updated channel file is added by using the Android resource packaging tool;
S712: the replaced installation package is signed by using the signing tool;
S714: the signed installation package is optimized by an optimizing tool, and the installation package is named by using the current channel number;
S716: the channel number in a channel list is traversed, and the operations in S706 to S714 are performed circularly; and S718 is performed until traversing is completed;
S718: the intermediate process files are cleaned;
S720: if the current operation is signing, then the signing tool is called to sign; and
S722: an installation package optimizing tool is used for optimizing to generate a final signature package; finally, S718 is performed to clean the intermediate process file.
Wherein, the channel file formatting tool in S704 is a tool written by the C programming language, which can generate an attribute file; a list attribute statement is in the file, the attribute value is the channel number in the channel text file, and each channel number takes a comma as a separator. This attribute can be read by the packaging script to serve as a parameter of a "for" cyclical task.

Preferably, the above preferred embodiment can also be designed as an offline usage mode and an online usage mode; wherein,
the offline usage mode is providing all tool related packages for the user; the user first ensures that a java execution environment is installed, and then opens the tool to obtain the generated installation package on the output path by setting the related parameters on the tool interface and directly clicking the Generate button;
the online usage mode can put the tool related packages in the cloud, and the user only needs to login to the tool to use the system, upload the installation package, the channel text file, the signature certificate and password which are to be packaged, and start packaging. The system automatically calls the tool in the background to complete packaging. After packaging is completed, the user only needs to download the installation package.

To sum up, through the embodiments, the preferred embodiments and the preferred implementations of the present invention, the problem that the process of multi-channel packaging of the installation package of the application is tedious is solved, the efficiency of the multi-channel packaging is increased, and the user experience is improved.

### Industrial Applicability

Through the present invention, the unzipping module unzips the installation package of the application, the extracting module respectively extracts each piece of channel information from multiple pieces of acquired channel information, and the packaging module performs packaging according to each piece of channel information extracted by the extracting module and the installation package unzipped by the unzipping module respectively to generate a plurality of installation packages respectively corresponding to each piece of channel information; in this way, the problem that the process of multi-channel packaging of the installation package of the application is tedious is solved, the efficiency of the multi-channel packaging is increased, and the user experience is improved.

Obviously, those skilled in the art should appreciate that the above modules and steps of the present invention can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device, or they are made into integrated circuit modules, respectively, or multiple modules and steps of them are made into a single integrated circuit module to implement. In this way, the present invention is not limited to any particular combination of hardware and software.

The above is only the preferred embodiment of the present invention and not intended to limit the present invention; for those skilled in the art, the present invention may have various modifications and changes. Any modifications, equivalent replacements, improvements and the like within the spirit and principle of the present invention shall fall within the scope of the claims of the present invention.

## Claims

1. A device for packaging an application, comprising: an unzipping module, an extracting module and a packaging module, wherein,
the unzipping module is configured to unzip an installation package of the application;
the extracting module is configured to respectively extract each piece of channel information from multiple pieces of acquired channel information; and
the packaging module is coupled with the extracting module and the unzipping module, and is configured to perform packaging according to each piece of channel information extracted by the extracting module and the installation package unzipped by the unzipping module respectively to generate multiple installation packages respectively corresponding to each piece of channel information.

2. The device according to claim 1, further comprising:
an acquiring module, which is coupled with the extracting module, and is configured to acquire the multiple pieces of channel information.

3. The device according to claim 2, wherein the multiple pieces of channel information are preset by a user.

4. The device according to claim 2, wherein in a situation where the acquiring module fails to acquire multiple pieces of channel information, the packaging module is further configured to generate an installation package according to the installation package unzipped by the unzipping module.

5. The device according to claim 1, wherein the packaging module is further configured to name the installation package obtained by packaging, wherein the name of the installation package comprises an identity of the channel information used for generating the installation package.

6. The device according to any one of claims 1 to 5, wherein the installation package generated by the packaging module is one which is signed.

7. The device according to any one of claims 1 to 5, wherein the packaging module comprises:
a replacing unit, which is configured to respectively replace the channel information in the installation package unzipped by the unzipping module with each piece of extracted channel information; and
a packaging unit, which is configured to package the installation package processed by the replacing unit to generate multiple installation packages respectively corresponding to each piece of channel information.

8. The device according to any one of claims 1 to 5, further comprising:
a receiving module, which is coupled with the unzipping module, and is configured to receive, through a connection with a user terminal, the installation package of the application uploaded by the user terminal; and
a sending module, which is coupled with the packaging module, and is configured to send the installation package obtained by processing of the packaging module to the user terminal.

9. A method for packaging an application, comprising:
unzipping an installation package of an application;
respectively extracting each piece of channel information from multiple pieces of acquired channel information; and
performing packaging according to each piece of extracted channel information and the unzipped installation package respectively to generate multiple installation packages respectively corresponding to each piece of channel information.

10. The method according to claim 9, wherein,
before unzipping the installation package of the application, the method further comprises: receiving, through a connection with a user terminal, the installation package of the application uploaded by the user terminal;
after generating multiple installation packages respectively corresponding to each piece of channel information, the method further comprises: sending the installation package obtained by packaging to the user terminal.
